Europäisches Patentamt

(19) European Patent Office

Office européen des brevets

(11) Publication number: **0 170 581**
A1

## (12) EUROPEAN PATENT APPLICATION

(21) Application number: **85401392.7**

(22) Date of filing: **09.07.85**

(51) Int. Cl.⁴: **C 03 B 37/02**
**C 03 B 37/08**

(30) Priority: **13.07.84 IT 2188984**

(43) Date of publication of application:
**05.02.86 Bulletin 86/6**

(84) Designated Contracting States:
**BE CH DE FR GB LI NL SE**

(71) Applicant: VITROFIL SpA
31 Foro Buonaparte
Milan(IT)

(72) Inventor: Tettamanzi, Natale
SS. Giacomo E Filippo 66/1
17015 Celle Ligure Savona(IT)

(74) Representative: Hirsch, Marc-Roger
34 rue de Bassano
F-75008 Paris(FR)

(54) A device and a process for preparing glass fibers.

(57) A device suitable to be used as a spinneret for spinning melted glass, in a direction opposite to that of the force of gravity, consisting of a body (1) of a stiff material, extending parallelly to the surface of the glass bath and in contact with the same and containing a plurality of openings (or nozzles (3)) which do not communicate with one another and extend through the entire thickness (2) of said body, thereby each one of these openings delimits an area of the bath, from which the melted glass is drawn out as a filament by extrusion.

A process for spinning melted glass which comprises bringing into contact with the surface of the glass bath, in a position parallel to said surface, a body of a stiff material, provided with a plurality of openings (or nozzles) which do not communicate with one another and extend through the entire thickness of said body, and in drawing out from said bath, through each opening, a filament of melted glass by drawing from bottom upwards.

./...

Fig. I

# A DEVICE AND A PROCESS FOR PREPARING GLASS FIBERS

The present invention relates to a new device and to a process for spinning glass.

It is known that glass fibers are obtained, at least according to methods of industrial preparation, by extruding the glass in the melted state through nozzles or perforations, arranged in a large number on plates which are generally metallic, or spinnerets. In order to obtain fibers, all having the same diameter, the bottom plates of the spinneret, where the nozzles are arranged, as well as the glass on the spinneret have to be at the same temperature throughout so that all the meniscuses can have the same temperature: such conditions lead to reducing as much as possible the plate surface and the glass volume. In other words, the number of nozzles per surface unit must be as high as possible, and such requirement involves further problems.

Industrially, two types of nozzles are used, one corresponding exactly to a perforation of a metal plate, the other being similar to a small pipe protruding from the nozzle holder plate. The former type allows from a practical point of view, a higher density, but it cannot avoid the spreading of the glass onto the spinneret metal and the wetting of said metal (owing to the known tendency of the greater base of the meniscus to increase its own area), whereas the latter type has the advantage of limiting the glass expansion through wetting only at the circular outlet rims.

Of course, another way of overcoming the problem is to reduce the nozzle diameters, but this solution involves a decrease of fluid flow, of mass stream, which, if the temperature along the nozzle height can be considered as constant, obeys the classic Hagen-Poiseulle law. Spinning by means of traditional spinnerets, however, always involves forces that tend to stretch the meniscus base and to increase its area with the eventual problem that two or more fibers will join together to form only one fiber.

Generally, it is always difficult to keep the same type of thermal exchange on all the meniscuses; it is therefore necessary to provide for increasingly more sophisticated artificial cooling systems, that may be synthetized as follows:

1. Use of heat absorbers, consting of sheets made of a material having a good coefficient of thermal conductivity, and of small pipes cooled by suitable fluids, generally water.

2. Change of the atmosphere surrounding the meniscuses, by conveying gases, generally air, against or parallelly to the nozzle holder plate.

Evidently, in some applications a combination of the two systems prove to be useful.

Of course, the same behaviour is valid for all the fibers drawn out contemporaneously from the same bath or from glass baths under the same conditions. However, when the density of the formed meniscuses increases sufficiently for the distance between the meniscus axes to decrease below 0.5 cm, the process becomes unstable, if the cooling is natural, as small temperature differences tend to unite the meniscuses into a single one.

An improved stabilization is obtained by cooling the meniscuses artificially, but the single meniscus or the single set of meniscuses must be conditioned, with particular characteristics, which practically precludes the carrying out of a spinning technology.

The present invention, on the contrary, proposes a solution to the problem, retaining all the advantages inherent in the condition that the meniscus base is not in contact with a surface onto which it tends to spread and from a flow limitation caused by the passing diameter of the fluid glass mass.

The principle consists, in fact, in separating physically any meniscus from the surrounding ones, by providing a spinneret that subdivides the free surface of a melted glass bath into many limited microareas, from each one of which a single filament is drawn out, always in a direction opposite to the force of gravity. Such a spinneret may consist, in a general way, of a stiff body, so that it cannot undergo any deformations during the spinning operations, which body stretches parallelly and in contact with the bath surface and is provided with at least one, but generally with a plurality of openings, of any shape, but not communicating with one another, which extend through the entire thickness of said body, till they reach the surface of the lower glass bath. Thus such openings give rise to as many delimited areas of the bath, each one of them comparable to a spinning microbath, from each one of which a filament can be obtained by drawing the melted glass from bottom upward.

The new type of spinneret can then be provided in the form of perforated plates, nets or other forms adapted to give rise to a set of limited areas and separated from one another, by using materials that can not be attacked by the atmosphere lying above the glass or by the glass itself. The spinnerets can be then heated electrically or by means of other technologies, whereas the glass is kept at the necessary temperature by means of other known methods. Then, a conditioning or cooling system for the yarn can be applied above the spinneret. The said spinneret is dipped slightly (at the most by one or two millimeters) into the melted glass, the dipping depth depending only on the swing of the fluid level.

Experimentally, it has been found that in the temperature ranges used during the trial and corresponding to viscosities ranging between $10^4$ and $10^2$ Pa.s., the spinneret dipping can be pursued till only 0.5 mm emerge, i.e. the limit proposed to guarantee a certain working reassurance, particularly when it is required to work at high viscosities (low temperatures). Under these conditions, in fact, large sized meniscuses form with a very extended base. Any factor leading to an increase of the mass stream can turn into a further expansion of the meniscus which, after having touched the microbath walls, can succeed in climbing over them and in joining the neighbouring glass before the operator is able to intervene. Thus many microareas are delimited and from each of them a fiber can be obtained by drawing of the melted glass upwards from bottom. Under such conditions, the spinneret is not longer subject to the load conditions depending on the pressure, under normal conditions, exerted by the overhanging liquid column.

On the contrary, part of its weight, although a small fraction, is cancelled by Archimede's thrust exerted by the melted glass. Furthermore, it also means that the miniscuses, from which the fibers arise, are not connected with the spinneret and therefore the effect of the force necessary to obtain the fiber, although small, does not act on the spinneret. It is therefore evident that part of the practical problems in devising the spinneret are eliminated.

Therefore, one object of the present invention consists in providing a device suitable for use as a spinneret for spinning melted glass by operating in a direction opposite to the force of gravity, characterized in that it consists of or it includes a body of stiff material, extending parallelly to the surface of the melted glass bath and in contact with same, said body containing a plurality of openings, or nozzles, which do not communicate with one another and extend through the entire thickness of said body, whereby each of these openings delimits an area of the bath from which the glass is drawn out in the form of a filament by extrusion.

Another object of the present invention is to provide a process for spinning glass, comprising bringing into contact with the surface of a bath of melted glass a body of stiff material, extending parallelly to the surface of said bath, said body being provided with a plurality of openings, or nozzles, which do not communicate with one another and extend through the entire thickness of said body, and in drawing out from such bath, through each opening, a filament of melted glass by continuously drawing from bottom upwards.

The drawing out of the melted glass from each opening of the spinneret, from which the spinning process starts, according to the present invention, can be carried out by dipping into the bath any body of appropriate size through such openings, so that it is wetted.

When this body is drawn back, if the fluid viscosity is comprised within a certain range, generally between $10^2$ and $10^4$ d P.s., a filament is obtained, coming from a meniscus raising over the free surface of the glass. By applying to the filament thus achieved, a constant tractive force opposite to that of gravity, a stationary spinning process is obtained since the forces of viscous origin, of surface tension and the force due to acceleration of gravity will be in balance, the first two forces being constant because the temperature is constant and the third one because the mass involved is always the same. In general, if the tractive force is increased, the meniscus will tend to increase its own height, and the filament diameter will decrease. The process, however will remain stable. A continuous filament is thus obtained for each microaera of the spinneret. Such a filament, successively, can be wound up on a roller driven at a controlled speed of rotation, which provided for the drawing out of the filament from the bath in a continuous way and for winding it up on the roller itself.

It should be noted that when using a spinneret according to the present invention, when a fiber breaks, it falls down again onto the spinneret, but it does not cause any damage, since there is no formation of drops. Furthermore, with this arrangement of spinning two temperature regulations of the glass can be obtained, one at level of the sump or channel wherein the glass is contained, the other, by means of the spinneret, at the meniscus level. It has also been noted that, if the periphery of the greater base of the meniscus comes into contact with the walls, having occupied the whole free surface of the microbath, the spinning proceeds unaltered and problems arise only when the temperature of the melted glass is such that meniscuses having a wider surface are produced. Under such conditions the melted glass climbs, because of the tractive action, along the separation walls and, under limit conditions, neighbouring meniscuses join each other.

With such a type of spinneret all the problems cease, concerning the change of spinneret which, after having been simply heated to an elevated temperature and lifted from the bath, is freed from the adhering glass in a short time so that it can be removed without damage.

Finally, the fibers obtained by means of such a spinneret present a lower rate of surface defects as compared with those prepared with traditional spinnerets, which confers a higher tensile strength on the fibers themselves.

The installation of a new spinning device equally proves to be easier, as it is only necessary to control the surface parallelism between the surface of the bath and the average level of the spinneret, and this object is easily achieved by means of one of the numerous practical methods of normal use, the simplest of which consists in positioning some reference stops on the support slides of the spinnerets. Also, in this case it proved to be advantageous to heat the spinneret with the classic system of connecting it to a low-tension secondary winding of a transformer interlocked to a regulation chain, operated by a signal proportional to the temperature of the spinneret itself; in fact the air conditioning system used, producing generally 10°C and 95% relative humidity at the outlet of the threads, tends to cool the spinneret faster than the glass, giving rise to a lowering of efficiency. Reduced heating is sufficient to eliminate the drawback.

The shape and the size of the spinneret openings, through which the spinning is carried out, are not critical and neither are the distance between contiguous openings and the spinneret thickness.

The spinning direction, or axis is preferably normal to the bath surface, but, it is also possible to operate with inclinations of such axis, with respect to the normal direction, up to values of about 28°.

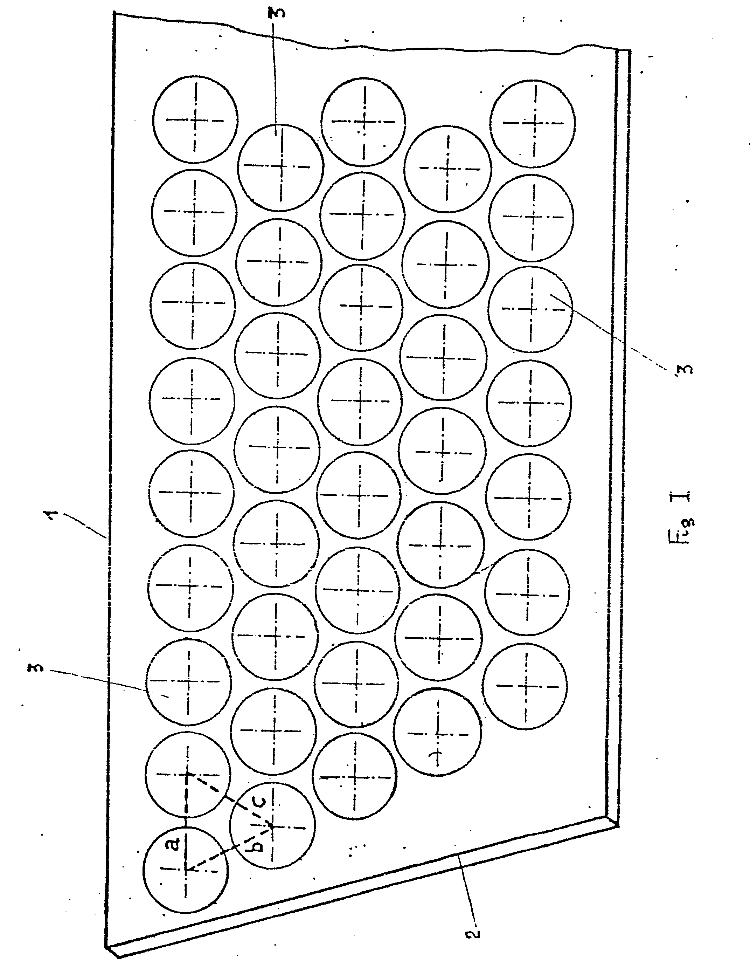

Figure 1 represents a type of spinneret constructed and used for the experiments according to the examples given hereinafter.

It consists of a sheet (1), whose thickness is indicated by (2) and which is provided with a plurality of openings or nozzles (3) in the form of holes.

In the examples hereinafter the glass conditioning has been carried out either by means of electrodes dipped in the glass, or by exploiting the electric conductivity of refractory material plates utilized in contact with the glass itself. In both cases temperature and thermal level have been kept homogeneous within ± 1.5°C, in the whole volume of conditioned glass, always exploiting however the well known regulation technologies, as the important mass of glass involved and the possibility of isolating it thermically from the environment offer better operative conditions.

The type of glass utilized was in every case that designed by the symbol E.

EXAMPLE 1

A spinneret of the type described in the figure was set up, which had circular holes (nozzles) of a diameter of two millimeters distributed with a density of 23 nozzles per cm², and the center of which is arranged on the vertices of an equilateral triangle with a side lenght of 2.2 mm (represented in the figure by sides (a), (b), (c)). The spinneret had a thickness of 2.5 mm, and the material utilized was an alloy of platinum (80%) and rhodium (20%). To start the spinning, the spinneret was dipped by about 1 mm into the melted glass and was electrically heated with a dissipation of about 4 to 6 kVA. Then a wire of the same type of alloy was dipped into each nozzle, such a wire protruding from a plate, called brush, guided in such a way that each metal wire, having a length of 3 mm and a diameter of 1 mm, was wetted by the glass. During the subsequent slow lifting of the brush, whereby which each nozzle of the spinneret gives rise to a wire, the operator was able to collect the sheaf of formed filaments and to convey them by the usual manual operations of introduction into the specally prearranged hollows, toward the dressing group, the thread guides or butterfles and finally toward the collecting mandrel. During all the phases described in succcession, cooling was conformed by means of conditioned air having a relative humidity of 85% and a temperature of 18°C. Operation begins at a spinning rate of 20 m/s, thereby obtaining a flow of about 58 kg/h with a yarn having a diameter of 16 micrometers. The spinning rate was then gradually increased to 30 m/s, with a consequent decrease of the yarn diameters to 13 micrometers, without observing any appreciable decrease in the mass of spun glass. A further increase of the rate to 40 m/s gave rise to a yarn having a diameter of about 11 micrometers, without any drawback. For each type of diameter, tensile strength tests were carried out on fibers having a free length between the holdfasts of more than 50 mm. The resulting maximum tensile strength was 304.6 kg/mm², as an average value on significant samples of 100 fibers for each kind of diameter. The fibers of traditional production of the same type of glass showed for such free length a maximum tensile strength of about 50 kg/mm².

EXAMPLE 2

A spinneret out of the same type was provided but with a nozzle density higher than that described in example 1, with nozzles having a diameter of 1 mm. The nozzle number was about 60 per cm², the spinneret thickness was about 2.5 mm, with a total of 600 nozzles. As in example 1, the spinneret was set up and heated before beginning the spinning. In this second type of tests the brush of the preceding example was replaced by a metal plate that was placed on the spinnerets and tallied perfectly with the surface of the latter. At the beginning of the operations the spinneret was dipped into the glass bath by almost its whole thickness and it was kept there for a certain period of time, thereafter it was taken back to the usual position and the plate was slowly removed, while dragging with it a filament from each nozzle. The operator, working as in example 1, started the spinning. Average flows were obtained which were variable as a function of the volume of the cooling gas used(air at 20°C and at 82% of relative humidity). Actually reliable spinnings were obtained under the conditions reported on the following table.

| Spinning rate (m/s) | Flow (kg/h) | Diameter of the primary filaments (µm) |
|---|---|---|
| 40 | 14.80 | 9.5 |
| 30 | 15.10 | 11 |
| 20 | 15.30 | 13 |

EXAMPLE 3

Using the spinneret and the conditions of example 2, the available speed of the winding device of 100 m/s was fully exploited. Under such conditions it was necessary to increase the glass temperature by 12°C, in order to improve the spinning conditions, by combining this action with an increase of the cooling air flow. With a flow of about 14 kg per hour, primary filaments were obtained having a diameter of about 0.6 µm. The spinning proved to be rendered extremely constant and stable by varying the parameters depending on the glass temperature. By varying the latter, it was possible, in fact, without any problem, to vary the flow and therefore the spinning diameter. In particular, if the thermal level were modified, by acting only on the glass surface, where the meniscus forms, the reply time would increase by about one minute. On the contrary the response will be slower, if one acts on the air cooling, because, according to all expectation, and as it is possible to observe by measuring the diameter of the produced fibers, the title lowering starts from the spinnerets center and goes on slowly outwards.

EXAMPLE 4

For demonstrative purpose, using a spinneret of the same type as that described in example 1, with a nozzle density equal to about 23 per cm² and total number of nozzles equal to 2,400, only two parts of the spinneret were used, each one of about 800 nozzles. The spinning continued regularly without any drawback, whichever was the part of the spinneret that was not involved in the spinning.

EXAMPLE 5

A spinneret similar to the one of example 1 was used, but having a thickness of 6 mm. Operating proceeded under conditions similar to those of said example, varying the dipping level of the spinneret in subsequent tests from starting 2 mm to 3.4 and 5 mm without any drawback in the fiber production. It was noted that the screening effect on the meniscuses produced by the raising of the spinneret on the liquid level lowered the thermal exchange of the meniscuses themselves and consequently the diameter of the resulting fiber decreased, together with the amount of material spun per unit of time at a constant rate of 40 $m.s^{-1}$, as reported on the following table.

| Dipping (mm) | Fiber diameter (μm) | Spun material g/s |
|---|---|---|
| 2 | 10.7 | 10.9 |
| 3 | 11.9 | 13.5 |
| 4 | 12.4 | 14.7 |
| 5 | 13 | 16.1 |

1 0170581

## CLAIMS

1.- A device suitable for use as a spinneret for spinning melted glass, carried out in a direction opposite to that of the force of gravity, characterized in that it consists of or it includes a body (1) of stiff material, extending parallelly to the surface of the melted glass bath and which is in contact with same, said body containing a plurality of openings, or nozzles (3), which do not communicate with one another and extend through the entire thickness (2) of said body, whereby each one of these openings delimits an area of the bath from which the melted glass is drawn out in the form of a filament by extrusion.

2.- A process for spinning glass, which comprises in bringing into contact with the surface of a melted glass bath a body of stiff material, extending parallelly to the surface of said bath, provided with a plurality of openings, or nozzles (3) which do not communicate with one another and extend through the entire thickness of said body, and drawing out from such a bath, through each opening, a filament of melted glass by continuously drawing from the bottom upwards.

Fig I

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-2 225 667 (STAELIN) <br> * Whole document * | 1,2 | C 03 B 37/02 <br> C 03 B 37/08 |
| X | FR-A-2 094 147 (FIBREGLASS LIMITED) <br> * Whole document * | 1,,2 | |

TECHNICAL FIELDS SEARCHED (Int. Cl.4)

C 03 B 37/00

The present search report has been drawn up for all claims

| Place of search | Date of completion of the search | Examiner |
|---|---|---|
| THE HAGUE | 02-09-1985 | VAN DEN BOSSCHE W.L. |